# EUROPEAN PATENT SPECIFICATION

(11) **EP 3 285 112 B1**
(45) Date of publication and mention of the grant of the patent: **02.09.2020**
(21) Application number: 15888940.2
(22) Date of filing: 29.07.2015
(51) Int. Cl.: G02F 1/1337, G02F 1/13

(54) **RELIEF PRINTING PLATE**
RELIEFDRUCKPLATTE
PLAQUE D'IMPRESSION EN RELIEF

(30) Priority: 16.04.2015 CN 201510181226
(43) Date of publication of application: 21.02.2018
(73) Proprietor: BOE Technology Group Co., Ltd., Beijing 100015 (CN); Ordos Yuansheng Optoelectronics Co., Ltd., Ordos, Inner Mongolia 017020 (CN)
(72) Inventor: LI, Peimao, Beijing 100176 (CN); WANG, Xuelu, Beijing 100176 (CN); CHU, Zhoushuo, Beijing 100176 (CN); XUE, Yanpeng, Beijing 100176 (CN)
(74) Representative: Klunker IP Patentanwälte PartG mbB
(86) International application number: PCT/CN2015/085432
(87) International publication number: WO 2016/165236

(56) References cited:
- CN-A- 102 069 652
- CN-C- 1 268 973
- CN-U- 202 256 967
- JP-A- 2011 201 101
- JP-A- 2012 076 304
- KR-B1- 101 041 616
- US-A1- 2011 051 067

## Description

### TECHNICAL FIELD

The present invention relates to a transfer relief plate.

### BACKGROUND

In a liquid crystal display device, an alignment film is a thin film formed on a surface of a glass substrate and configured to make liquid crystals arranged in a certain sequence. The alignment film can be formed on the surface of the glass substrate by coating polyimide solution (abbreviated to PI) onto the surface of the glass substrate and heating the coated PI solution so as to volatilize the organic solvent in the PI solution. Usually, a transfer relief plate in which PI solution is absorbed is utilized to print the PI solution onto the glass substrate, so as to achieve the coating of the PI solution. The transfer relief plate is a plate configured to print PI solution onto the glass substrate. The transfer relief plate can be an APR (Asahikasei Photosensitive Resin) plate.

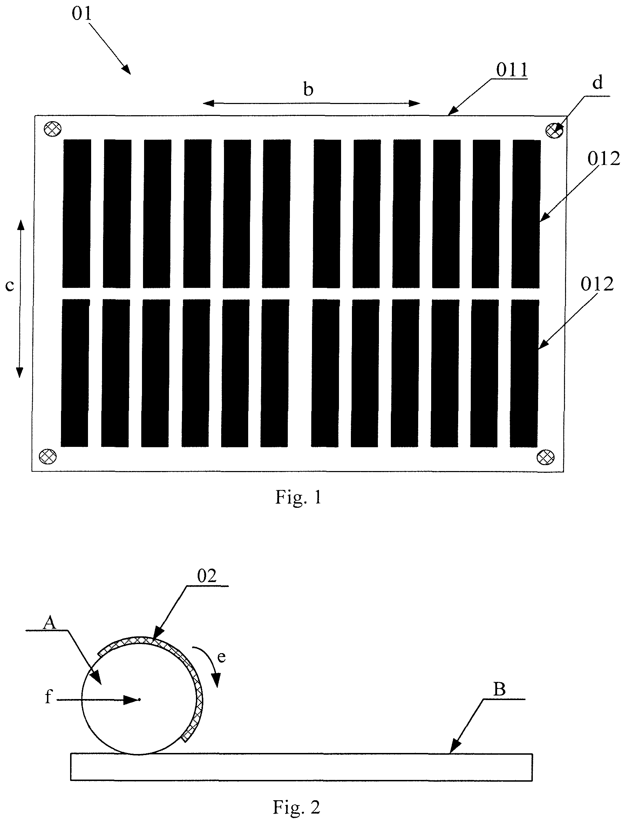

In general, the transfer relief plate has a rectangular shape. When the transfer relief plate is used to print PI solution, the transfer relief plate is soaked with the PI solution, and is wrapped onto a roller and thus fixed to the roller. And then, the roller wrapped with the transfer relief plate rolls on the glass substrate, thereby printing the PI solution to the surface of the glass substrate. On the transfer relief plate, a direction in parallel with an axis of the roller is a non-stretching direction of the transfer relief plate, while a direction perpendicular to the non-stretching direction is a stretching direction of the transfer relief plate. Referring to Fig.1, which is an illustrative structural view of a conventional transfer relief plate 01, Direction b is the stretching direction of the transfer relief plate 01 and Direction c is the non-stretching direction of the transfer relief plate 01. The transfer relief plate 01 comprises a base plate 011 having a rectangular shape. Four corners of the base plate 011 are provided with plate hanging locations d, through which the base plate 011 is fixed to the roller. A plurality of strip-like protrusions 012 are disposed on the base plate 011 and are arranged in two groups along the non-stretching direction c of the base plate 011. There is an interval between any two adjacent strip-like protrusions 012.

The above transfer relief plate at least has the following problems. When the transfer relief plate is used to wrap the roller and the roller wrapped with the transfer relief plate rolls on the glass substrate, the transfer relief plate will be stretched in the stretching direction. Since the plate hanging locations d where the transfer relief plate and the roller are fixed to each other are positioned at the four corners of the base plate, edges of the transfer relief plate which are in parallel with the stretching direction have a larger stretched degree than a central portion of the transfer relief plate, which causes a poor uniformity of the printed PI solution.

KR 101 041 616 B1 discloses a transfer plate used for printing alignment film, the transfer plate comprising a transfer section for transferring the alignment film to a substrate, a pattern portion having a first thickness in the transfer portion, a pattern edge portion surrounding the edge of the pattern portion and having a second thickness thinner than the pattern portion, and a dummy pattern portion having a first thickness in the entire region except the pattern edge portion and the pattern portion in the transfer portion, wherein the transfer portion has an area larger than the area of the substrate plate.

US 2011/051067 A1 discloses an orientation film printing pattern of a liquid crystal display panel including a rectangular shape which adopts apexes of the respective corner portions as apexes thereof as a first rectangular shape and a rectangular shape which is constituted of a pair of short sides and a pair of long sides as a second rectangular shape.

### SUMMARY

It is an object of the present invention to provide a transfer relief plate which may solve one or more problems in the art.

The object is achieved by the features of independent claim 1. Further embodiments are defined in the dependent claims.

In the transfer relief plate according to the embodiments of the present disclosure, since every one of the strip-like protrusions on the transfer relief plate is inclined towards a center of a side which is adjacent thereto and is in parallel with the stretching direction of the transfer relief plate, or protrudes toward a direction away from the center of the base plate, when the roller wrapped with the transfer relief plate rolls on the glass substrate, the transfer relief plate is stretched in its stretching direction and edges of the transfer relief plate in parallel with the stretching direction have a larger stretched degree than the central portion of the transfer relief plate, so that one end of the strip-like protrusion adjacent to a side of the transfer relief plate in parallel with the stretching direction has a stretched degree equal to that of the other end of the strip-like protrusion, or so that the stretched degree of both ends of the strip-like protrusion is equal to that of the center of the strip-like protrusion. Thus, the uniformity of the printed PI solution is improved.

### BRIEF DESCRIPTION OF THE DRAWINGS

In order to clearly illustrate the technical solutions of the embodiments of the disclosure, the drawings of the embodiments will be briefly described in the following; it is obvious that the drawings described below are only related to some embodiments of the disclosure and thus are not limitative of the disclosure.
Fig.1 is an illustrative structural view of a conventional transfer relief plate;
Fig.2 is an application scenario view of a transfer relief plate according to an embodiment of the present disclosure;
Fig.3 is an illustrative structural view of a transfer relief plate according to an embodiments of the present disclosure;
Fig.4 is an illustrative structural view of another transfer relief plate according to the embodiments of the present disclosure;
Fig.5 is an illustrative structural view of one type of the first strip-like protrusions according to the embodiment as illustrated in Fig.4;
Fig.6 is an illustrative structural view of another type of the first strip-like protrusions according to the embodiment as illustrated in Fig.4; and
Fig.7 is an enlarged partial view of the transfer relief plate according to the embodiment as illustrated in Fig.4.

### DETAILED DESCRIPTION

In order to make objects, technical details and advantages of the embodiments of the disclosure apparent, the technical solutions of the embodiment will be described in a clearly and fully understandable way in connection with the drawings related to the embodiments of the disclosure. It is obvious that the described embodiments are just a part but not all of the embodiments of the disclosure. Based on the described embodiments herein, those skilled in the art can obtain other embodiment(s), without any inventive work, which should be within the scope of the disclosure.

Fig.2 illustrates an application scenario view of a transfer relief plate 02 according to one embodiment of the present disclosure. As illustrated in Fig.2, the roller A has a cylindrical structure and the transfer relief plate 02 is of rectangular shape having a length in the non-stretching direction (not illustrated in Fig.2) equal to a height of the cylindrical structure and a length in the stretching direction (not illustrated in Fig.2) smaller than a perimeter of the cylindrical structure. The transfer relief plate 02 is soaked with PI solution. The transfer relief plate 02 is wrapped onto the cylindrical surface of the roller A along the stretching direction of the transfer relief plate 02 and is fixed to the roller A at plate hanging locations (not illustrated in Fig.2) of the transfer relief plate 02. The non-stretching direction of the transfer relief plate 02 is in parallel with an axis of the roller A. A surface of a glass substrate B can be a surface to be printed with PI solution. When the roller A wrapped with the transfer relief plate 02 rolls on the surface of a glass substrate B along a direction e as indicated in Fig.2, the PI solution on the transfer relief plate 02 can be printed onto the surface of the glass substrate B.

In this embodiment, on the transfer relief plate 02, a direction in parallel with the axis f of the roller A is the non-stretching direction of the transfer relief plate 02 and a direction perpendicular to the non-stretching direction is the stretching direction of the transfer relief plate 02.

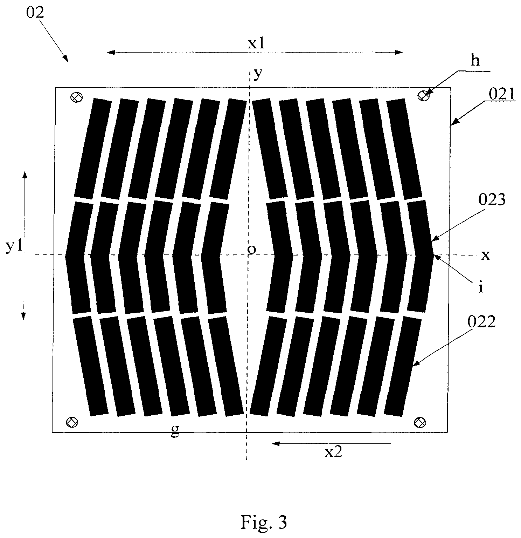

Referring to Fig.3, which shows an illustrative structural view of the transfer relief plate 02 according to one embodiment of the present disclosure, the transfer relief plate 02 can be wrapped on the cylindrical surface of the roller. Referring to Fig.3, the transfer relief plate 02 comprises a base plate 021 which is divided by two axes of the base plate 021 into four regions having equivalent areas. As illustrated in Fig. 3, the two axes of the base plate 021 are the first axis x and the second axis y respectively.

The first axis x of the base plate 021 is in parallel with the stretching direction x1 of the transfer relief plate. The second axis y of the base plate 021 is in parallel with the non-stretching direction y1 of the transfer relief plate. The stretching direction x1 is perpendicular to the non-stretching direction y1. A plurality of strip-like protrusions are disposed on the base plate 021 and there is an interval between any two adjacent strip-like protrusions. After the transfer relief plate 02 is fixed to the roller A, the non-stretching direction y1 is in parallel with the axis of the roller.

The plurality of strip-like protrusions comprise a first strip-like protrusion 022 which is disposed in any one of the four regions. An end of the first strip-like protrusion 022, which is close to a first side of the base plate 021, is inclined to the central direction of the first side of the base plate. The first side of the base plate 021 is a side of the base plate 021 which is in parallel with the stretching direction x1 of the transfer relief plate 02 and is close to the first strip-like protrusion 022, such as the side g in Fig.3. The central direction of the first side of the base plate 021 is a direction x2 from one end of the side g toward the center of the side g, as illustrated in Fig.3.

The plurality of strip-like protrusions further comprise a second strip-like protrusion 023 which is symmetrically disposed in two of the four regions on the same side of the second axis y with the first axis x of the base plate as the symmetry axis. The center of the second strip-like protrusion 023 protrudes toward a direction away from the center of the base plate 021. As illustrated in Fig.3, the center i of the second strip-like protrusion 023 protrudes toward a direction away from the center O of the base plate 021.

It is to be noted that the base plate 021 has a rectangular shape. Four corners of the base plate 021 are provided with plate hanging locations h of the transfer relief plate 02, where the transfer relief plate 02 is fixed to the roller. When the transfer relief plate 02 is fixed on the roller, the non-stretching direction y1 of the transfer relief plate 02 is in parallel with the direction in which the axis of the roller is located and the stretching direction x1 of the transfer relief plate 02 is perpendicular to the non-stretching direction y1 of the transfer relief plate 02.

To sum up, in the transfer relief plate according to the embodiments of the present disclosure, since every one of the strip-like protrusions on the transfer relief plate is inclined to a center of an adjacent and corresponding side in parallel with the stretching direction of the transfer relief plate or protrudes toward a direction away from the center of the base plate, when the roller wrapped with the transfer relief plate is rolled on the glass substrate, the transfer relief plate is stretched in its stretching direction and edges of the transfer relief plate in parallel with the stretching direction have a stretched degree greater than the central portion of the transfer relief plate, so that one end of the strip-like protrusion adjacent to a side of the transfer relief plate and in parallel with the stretching direction has a stretched degree equal to that of the other end of the strip-like protrusion, or so that the stretched degree of both ends of the strip-like protrusion is equal to that of the center of the strip-like protrusion. Thus, the uniformity of the printed PI solution is improved. The embodiments of the present disclosure have solved the problem of poor uniformity of PI solution printed by conventional transfer relief plates and have improved the uniformity of the PI solution.

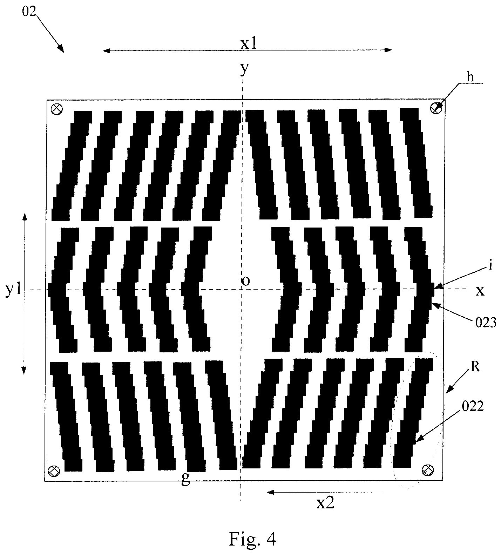

Referring to Fig.4, an illustrative structural view of another transfer relief plate 02 according to an embodiment of the present disclosure is illustrated. Referring to Fig.4, the transfer relief plate 02 comprises a base plate 021.

The base plate 021 has a rectangular shape and is provided with plate hanging locations h at four corners thereof.

The base plate 021 is divided by two axes of the base plate 021 into four regions having equivalent areas. As illustrated in Fig.4, the two axes of the base plate 021 are the first axis x and the second axis y respectively.

The first axis x of the base plate 021 is in parallel with the stretching direction x1 of the transfer relief plate. The second axis y of the base plate 021 is in parallel with the non-stretching direction y1 of the transfer relief plate. The stretching direction x1 is perpendicular to the non-stretching direction y1. A plurality of strip-like protrusions are disposed on the base plate 021 and there is an interval between any two adjacent strip-like protrusions. After the transfer relief plate 02 is fixed to the roller A, the non-stretching direction y1 is in parallel with a direction where the axis of the roller is located.

The plurality of strip-like protrusions comprise a first strip-like protrusion 022 which is disposed in any one of the four regions. An end of the first strip-like protrusion 022, which is close to the first side of the base plate 021, is inclined to the central direction of the first side of the base plate. The first strip-like protrusion 022 is any one of the plurality of strip-like protrusions which is disposed in any one region. The first side of the base plate 021 is a side of the base plate 021 which is in parallel with the stretching direction x1 of the transfer relief plate 02 and is close to the first strip-like protrusion 022, such as the side g in Fig.4. The central direction of the first side of the base plate 021 is a direction x2 from one end of the side g toward the center of the side g, as illustrated in Fig.4.

The plurality of strip-like protrusions further comprise a second strip-like protrusion 023 which is symmetrically disposed in any two of the four regions on the same side of the second axis y with the first axis x of the base plate as a symmetry axis. The center of the second strip-like protrusion 023 protrudes toward a direction away from the center of the base plate 021. As illustrated in Fig.4, the center i of the second strip-like protrusion 023 protrudes toward a direction away from the center O of the base plate 021.

In one embodiment according to the present disclosure, the first strip-like protrusions have the same lengths in the non-stretching direction y1 of the transfer relief plate 02. The lengths of the first strip-like protrusions in the non-stretching direction y1 and the lengths of the first strip-like protrusions in the stretching direction x1 are not limited in the embodiments of the present disclosure, but can be set as required in practical applications. The lengths of the second strip-like protrusions in the non-stretching direction y1 and the lengths of the second strip-like protrusions in the stretching direction x1 are not limited in the embodiments of the present disclosure, but can be set as required in practical applications.

In one embodiment according to the present disclosure, referring to Fig.4, the first strip-like protrusion 022 has a multi-stepped structure in the non-stretching direction y1 of the transfer relief plate 02.

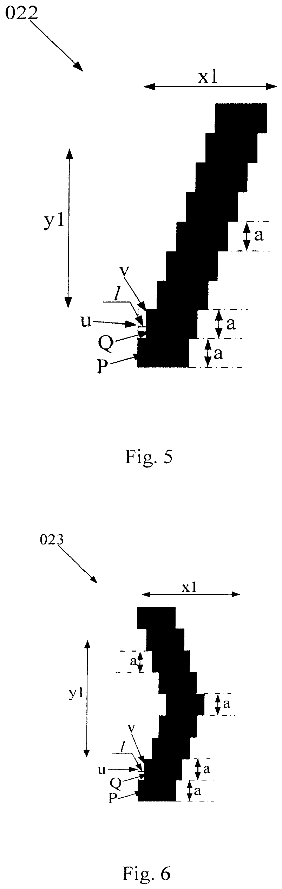

By way of example, referring to Fig.5 which illustrates an illustrative view of a structure of the first strip-like protrusion 022 according to the embodiment as illustrated in Fig.4, the first strip-like protrusion 022 is a strip-like protrusion disposed in any one of the four regions of the transfer relief plate 02. Referring to Fig.5, the first strip-like protrusion 022 has a stepped structure which comprises a plurality of steps, the shape of which can be rectangular. A length of any one step in the non-stretching direction y1 of the transfer relief plate 02 can be "a". A length of any one step in the stretching direction x1 of the transfer relief plate 02 is equal to the length of the strip-like protrusion in the stretching direction x1. The width of the step can be "*l*", wherein the width of the step refers to a difference between a distance from a first step of two adjacent steps in the same one strip-like protrusion to a second side of the base plate 021 and a distance from a second step of the two adjacent steps in the same strip-like protrusion to the second side of the base plate 021, wherein the second side refers to a side of the base plate 021 which is perpendicular to the stretching direction (i.e., perpendicular to the axis x). As illustrated in Fig.5, assuming that the first step is step P and the second step is step Q, the width of the first step P is a width *l* from the side u of the first step P to the side v of the second step Q.

By way of example, referring to Fig.6, which illustrates an illustrative structural view of the second strip-like protrusion 023 according to the embodiment as illustrated in Fig.4, the second strip-like protrusion 023 is a strip-like protrusion which is symmetrically disposed in any two of the four regions at the same side of the second axis y with the first axis x of the base plate 021 as a symmetry axis. The second strip-like protrusion 023 has an arc or triangular shape. Referring to Fig.6, the second strip-like protrusion 023 has a stepped structure which comprises a plurality of steps, the shape of which can be rectangular. A length of any one step in the non-stretching direction y1 of the transfer relief plate 02 can be "a". A length of any one step in the stretching direction x1 of the transfer relief plate 02 is equal to the length of the strip-like protrusion in the stretching direction x1. The width of the step can be "*l*", wherein the width of the step refers to a difference between distances from two adjacent steps in the same one strip-like protrusion to a second side of the base plate 021, the second side referring to a side of the base plate 021 which is perpendicular to the stretching direction (i.e., perpendicular to the axis x). As illustrated in Fig.6, assuming that the first step is a step P and the second step is a step Q, the width of the first step P is a width *l* from the side u of the first step P to the side v of the second step Q.

In this embodiment, the value of a can be a=L/N, wherein L is the length of the second strip-like protrusion 023 in the non-stretching direction y1 of the transfer relief plate 02, N is the total number of steps in the multi-stepped structure. For example, if the length of the second strip-like protrusion 023 in the non-stretching direction y1 of the transfer relief plate 02 is 40 cm and the total numbers of step N in the multi-stepped structure is 4, then the length a of any one step in the non-stretching direction y1 of the transfer relief plate 02 is 10 cm.

In this embodiment, the value of *l* can be set as required in practical applications, and in each step, the value of *l* is not limited in the embodiments of the present disclosure, but can be identical or different. In general, the glass substrate comprises a display region which is usually located in the central portion of the display panel and a non-display region which is located at the periphery of the display panel. The display region of the glass substrate is to be printed with PI solution. In the embodiments of the present invention, any one of the strip-like protrusions in the transfer relief plate 02 can print PI solution on a plurality of glass substrates simultaneously. That is to say, one strip-like protrusion can correspond to a plurality of glass substrates at the same time. Therefore, during printing PI solution, the non-display region of the glass substrate will be printed with PI solution. In the embodiments of the present disclosure, the PI solution disposed beyond the display region is called as Edge Margin (EM) data. The size of the EM data is the size of the PI solution disposed beyond the display region. The EM data typically includes data around the display region and the value of the EM data can comprise values in four directions of the display region, i.e., an upper direction, a lower direction, a left direction and a right direction, of the display region. Since the plate hanging locations of the transfer relief plate are provided at four corners of the transfer relief plate, the printed data is not uniform and thus the EM data is not uniform. On the glass substrate, the amount of the EM data is greater in areas close to the plate hanging locations, while the amount of the EM data is less in areas close to the central portion of the transfer relief plate. Therefore, in the embodiments of the present disclosure, the value of *l* can be determined according to the magnitude of data in the areas close to the plate hanging locations and the magnitude of data in the areas close to the central portion of the transfer relief plate, so as to avoid nonuniformity of the printed EM data.

Alternatively, a plurality of strip-like protrusions are arranged as n groups of strip-like protrusions in the non-stretching direction y1, wherein n is a positive integer. Each group of strip-like protrusions comprises at least two strip-like protrusions. Any two adjacent strip-like protrusions in each group of strip-like protrusions which are disposed on the same side of the second axis have the same interval. The value of n is not restricted in the embodiments of the present disclosure, but can be set as required in practical applications. By way of example, as illustrated in Fig.4, which illustrates an example in which n is 3, that is, the plurality of strip-like protrusions are set as 3 groups of strip-like protrusions in the non-stretching direction y1. It is seen from Fig.4 that each group of strip-like protrusions comprises 12 strip-like protrusions and any two adjacent strip-like protrusions in each group of strip-like protrusions which are disposed on the same side of the second axis y have the same interval.

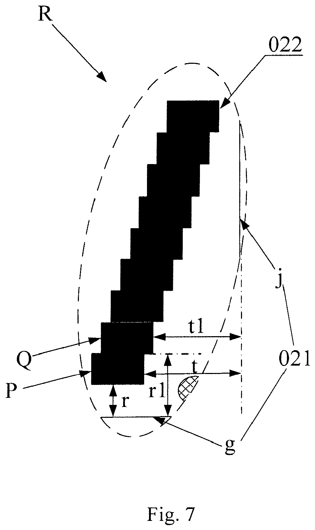

Further, referring to Fig.7, which illustrates an enlarged view of the zone R of the transfer relief plate 02 as illustrated in Fig.4, a multi-stepped structure of the first strip-like protrusion 022 is contained in the enlarged view. Referring to Fig.7, in the multi-stepped structure of the first strip-like protrusion 022, a distance from the first step P to the first side g of the base plate 021 is less than a distance from the second step Q to the first side of the base plate 021, and a distance from the first step P to the second side j of the base plate 021 is greater than a distance from the second step Q to the second side of the base plate 021. The first side g of the base plate 021 is a side of the base plate 021 which is in parallel with the stretching direction of the transfer relief plate 02 and is close to the first strip-like protrusion 022. The second side j of the base plate 021 is a side of the base plate 021 which is in parallel with the non-stretching direction of the transfer relief plate 02 and is close to the first strip-like protrusion 022. The first step P and the second step Q are any two adjacent steps in the multi-stepped structure. By way of example, a distance r from the first step P to the first side g of the base plate 021 is less than a distance rl from the second step Q to the first side g of the base plate 021, and a distance t from the first step P to the second side j of the base plate 021 is greater than a distance t1 from the second step Q to the second side j of the base plate 021.

It should be noted that in the embodiments of the present disclosure, the strip-like protrusions 022 and the strip-like protrusions 023 can be made of photosensitive resin. Alternatively, all of the strip-like protrusions 022 and 023 and the base plate 021 can be made of photosensitive resin. The photosensitive resin can be APR or other photosensitive materials, it is not restricted in the embodiments of the present disclosure.

To sum up, in the transfer relief plate according to the embodiments of the present disclosure, since every one of the strip-like protrusions on the transfer relief plate is inclined to a center of a side which is adjacent to the strip-like protrusion and in parallel with the stretching direction of the transfer relief plate, or protrudes toward a direction away from the center of the base plate, when the roller wrapped with the transfer relief plate is rolled on the glass substrate, the transfer relief plate is stretched in its stretching direction and edges of the transfer relief plate in parallel with the stretching direction have a greater stretched degree than the central portion of the transfer relief plate, so that one end of the strip-like protrusion adjacent to a side of the transfer relief plate in parallel with the stretching direction has a stretched degree equal to that of the other end of the strip-like protrusion, or so that the stretched degree of both ends of the strip-like protrusion is equal to that of the center of the strip-like protrusion. Thus, the uniformity of the printed PI solution is improved. The embodiments of the present disclosure have solved the problem of poor uniformity of PI solution printed by the current transfer relief plates and have improved the uniformity of the PI solution.

## Claims

1. A transfer relief plate (02) which is fixable to a side face of a roller (A) for printing an alignment layer onto a substrate (B), comprising a base plate (021) having a rectangular shape with plate hanging locations (h) at its four corners for fixing the plate to the roller,
wherein the base plate (021) is divided into four regions with identical areas by a first axis (x) and a second axis (y) perpendicular to the first axis (x),
wherein a plurality of strip-like protrusions are disposed on the base plate (021) and there is an interval between any two strip-like protrusions,
wherein the first axis (x) is parallel to a stretching direction (x1) of the transfer relief plate (02), and the second axis (y) is parallel to a non-stretching direction (y1) of the transfer relief plate (02), and
wherein the non-stretching direction (y1) is along an axis (f) of the roller (A) when the transfer relief plate (02) is fixed to the roller (A),
**characterized in that** the strip-like protrusions comprise a first strip-like protrusion (022) which is disposed in any one of the four regions, wherein an end of the first strip-like protrusion (022) is close to a first side (g) of the base plate (021) and is inclined with respect to a central direction of the first side (g) of the base plate (021), and wherein the first side (g) of the base plate (021) is in parallel with the stretching direction (x1) of the transfer relief plate (02) and is close to the first strip-like protrusion (022).

2. The transfer relief plate (02) according to claim 1, wherein the strip-like protrusions further comprise a second strip-like protrusion (023) which is disposed in two regions at the same side of the second axis (y), and which is arranged symmetrically about the first axis (x), and wherein a center (i) of the second strip-like protrusion (023) protrudes toward a direction away from a center (O) of the base plate (021).

3. The transfer relief plate (02) according to claim 1 or 2, wherein the plurality of strip-like protrusions has the same length in the non-stretching direction (y1).

4. The transfer relief plate (02) according to any one of claims 1 to 3, wherein the first strip-like protrusion (021) has a multi-stepped structure in the non-stretching direction (y1).

5. The transfer relief plate (02) according to claim 4, wherein any one step of the multi-stepped structure in the non-stretching direction (y1) of the transfer relief plate (02) has a length a= L/N, wherein L is a length of the first strip-like protrusion in the non-stretching direction (y1) of the transfer relief plate (02), N is a total number of steps in the multi-stepped structure.

6. The transfer relief plate (02) according to claim 4 or 5, wherein in the multi-stepped structure of the first strip-like protrusions (021), a distance (r) from a first step (P) to the first side (g) of the base plate (021) is less than a distance (r1) from a second step (Q) to the first side (g) of the base plate (021), and a distance (t) from the first step (P) to a second side (j) of the base plate (021) is greater than a distance (t1) from the second step (Q) to the second side (j) of the base plate (021), the second side (j) of the base plate (021) is a side of the base plate (021) which is in parallel with the non-stretching direction (y1) and is close to the first strip-like protrusion (022), and the first step (P) and the second step (Q) are any two adjacent steps in the multi-stepped structure of the first strip-like protrusion (022).

7. The transfer relief plate (02) according to any one of claims 2 to 4, wherein the second strip-like protrusion (023) is disposed in two regions at the same side of the second axis (y), and is arranged symmetrically about the first axis (x), and the second strip-like protrusion (023) has an arc or triangular shape.

8. The transfer relief plate (02) according to any one of claims 1 to 7, wherein the plurality of strip-like protrusions are arranged as n groups of strip-like protrusions in the non-stretching direction (y1), wherein n is a positive integer, and each group of strip-like protrusions comprises at least two strip-like protrusions.

9. The transfer relief plate (02) according to claim 8, wherein any two adjacent strip-like protrusions in each group of strip-like protrusions which are disposed at the same side of the second axis (y) have an identical interval.

10. The transfer relief plate (02) according to any one of claims 1 to 9, wherein the strip-like protrusions are made of photosensitive resin, or alternatively, both of the strip-like protrusions and the base plate (021) are made of photosensitive resin.

## Patentansprüche

1. Transferreliefplatte (02), die an einer Seitenfläche einer Walze (A) zum Drucken einer Ausrichtungsschicht auf ein Substrat (B) befestigbar ist, aufweisend eine Grundplatte (021) mit einer rechteckigen Form mit Plattenaufhängungsstellen (h) an ihren vier Ecken zum Befestigen der Platte an der Walze,
wobei die Grundplatte (021) in vier Regionen mit identischen Flächen durch eine erste Achse (x) und eine zweite Achse (y), die senkrecht zu der ersten Achse (x) ist, unterteilt ist,
wobei eine Vielzahl von streifenförmigen Vorsprüngen auf der Grundplatte (021) angeordnet ist und es einen Abstand zwischen zwei beliebigen zwei streifenförmigen Vorsprüngen gibt,
wobei die erste Achse (x) parallel zu einer Streckrichtung (x1) der Transferreliefplatte (02) ist und die zweite Achse (y) parallel zu einer Nicht-Streckrichtung (y1) der Transferreliefplatte (02) ist, und
wobei die Nicht-Streckrichtung (y1) entlang einer Achse (f) der Walze (A) verläuft, wenn die Transferreliefplatte (02) an der Walze (A) befestigt ist,
**dadurch gekennzeichnet, dass** die streifenförmigen Vorsprünge aufweisen einen ersten streifenähnlichen Vorsprung (022), der in einem beliebigen einen der vier Regionen angeordnet ist, wobei ein Ende des ersten streifenähnlichen Vorsprungs (022) nahe einer ersten Seite (g) der Grundplatte (021) liegt und in Bezug auf eine zentrale Richtung der ersten Seite (g) der Grundplatte (021) geneigt ist, und wobei die erste Seite (g) der Grundplatte (021) parallel zu der Streckrichtung (x1) der Transferreliefplatte (02) ist und nahe dem ersten streifenförmigen Vorsprung (022) liegt.

2. Transferreliefplatte (02) gemäß Anspruch 1, wobei die streifenförmigen Vorsprünge ferner einen zweiten streifenförmigen Vorsprung (023) aufweisen, der in zwei Regionen auf der gleichen Seite der zweiten Achse (y) angeordnet ist, und der symmetrisch um die erste Achse (x) angeordnet ist, und wobei ein Zentrum (i) des zweiten streifenförmigen Vorsprungs (023) in Richtung einer Richtung weg von einem Zentrum (O) der Grundplatte (021) vorsteht.

3. Transferreliefplatte (02) gemäß Anspruch 1 oder 2, wobei die Vielzahl von streifenförmigen Vorsprüngen die gleiche Länge in der Nicht-Streckrichtung (y1) aufweist.

4. Transferreliefplatte (02) gemäß einem der Ansprüche 1 bis 3, wobei der erste streifenförmige Vorsprung (021) eine mehrstufige Struktur in der Nicht-Streckrichtung (y1) aufweist.

5. Transferreliefplatte (02) gemäß Anspruch 4, wobei eine beliebige eine Stufe der mehrstufigen Struktur in der Nicht-Streckrichtung (y1) der Transferreliefplatte (02) eine Länge a=L/N aufweist, wobei L eine Länge des ersten streifenförmigen Vorsprungs in der Nicht-Streckrichtung (y1) der Transferreliefplatte (02) ist, N eine Gesamtzahl der Stufen in der mehrstufigen Struktur ist.

6. Transferreliefplatte (02) gemäß Anspruch 4 oder 5, wobei in der mehrstufigen Struktur der ersten streifenähnlichen Vorsprünge (021) ein Abstand (r) von einer ersten Stufe (P) zu der ersten Seite (g) der Grundplatte (021) kleiner als ein Abstand (r1) von einer zweiten Stufe (Q) zu der ersten Seite (g) der Grundplatte (021) ist, und ein Abstand (t) von der ersten Stufe (P) zu einer zweiten Seite (j) der Grundplatte (021) größer als ein Abstand (t1) von der zweiten Stufe (Q) zu der zweiten Seite (j) der Grundplatte (021) ist, die zweite Seite (j) der Grundplatte (021) eine Seite der Grundplatte (021) ist, die parallel mit der Nicht-Streckrichtung (y1) ist und nahe dem ersten streifenähnlichen Vorsprung (022) liegt, und die erste Stufe (P) und die zweite Stufe (Q) beliebige zwei benachbarte Stufen in der mehrstufigen Struktur des ersten streifenartigen Vorsprungs (022) sind.

7. Transferreliefplatte (02) gemäß einem der Ansprüche 2 bis 4, wobei der zweite streifenartige Vorsprung (023) in zwei Regionen an derselben Seite der zweiten Achse (y) angeordnet ist, und symmetrisch um die erste Achse (x) angeordnet ist, und der zweite streifenartige Vorsprung (023) eine Bogen- oder Dreiecksform aufweist.

8. Transferreliefplatte (02) gemäß einem der Ansprüche 1 bis 7, wobei die Vielzahl von streifenähnlichen Vorsprüngen als n Gruppen von streifenähnlichen Vorsprüngen in der Nicht-Streckrichtung (y1) angeordnet sind, wobei n eine positive ganze Zahl ist, und jede Gruppe von streifenartigen Vorsprüngen wenigstens zwei streifenartige Vorsprünge aufweist.

9. Transferreliefplatte (02) gemäß Anspruch 8, wobei beliebige zwei benachbarte streifenartige Vorsprünge in jeder Gruppe von streifenartigen Vorsprüngen, die an derselben Seite der zweiten Achse (y) angeordnet sind, einen identischen Abstand aufweisen.

10. Transferreliefplatte (02) gemäß einem der Ansprüche 1 bis 9, wobei die streifenartigen Vorsprünge aus lichtempfindlichem Harz hergestellt sind, oder alternativ sowohl die streifenartigen Vorsprünge als auch die Grundplatte (021) aus lichtempfindlichem Harz hergestellt sind.

## Revendications

1. Plaque en relief de transfert (02) qui peut être fixée sur une face latérale d'un rouleau (A) pour imprimer une couche d'alignement sur un substrat (B), comprenant une plaque de base (021) qui présente une forme rectangulaire et qui comporte des localisations d'accrochage de plaque (h) au niveau de ses quatre angles pour fixer la plaque sur le rouleau,
dans laquelle la plaque de base (021) est divisée selon quatre régions qui présentent des aires identiques au moyen d'un premier axe (x) et d'un second axe (y) qui est perpendiculaire au premier axe (x) ;
dans laquelle une pluralité de protubérances en forme de bande sont disposées sur la plaque de base (021) et il y a un intervalle entre deux quelconques protubérances en forme de bande ;
dans laquelle le premier axe (x) est parallèle à une direction d'étirement (x1) de la plaque en relief de transfert (02), et le second axe (y) est parallèle à une direction de non étirement (y1) de la plaque en relief de transfert (02) ; et
dans laquelle la direction de non étirement (y1) est suivant un axe (f) du rouleau (A) lorsque la plaque en relief de transfert (02) est fixée sur le rouleau (A) ;
**caractérisée en ce que** les protubérances en forme de bande comprennent une première protubérance en forme de bande (022) qui est disposée dans l'une quelconque des quatre régions, dans laquelle une extrémité de la première protubérance en forme de bande (022) est proche d'un premier côté (g) de la plaque de base (021) et est inclinée par rapport à une direction centrale du premier côté (g) de la plaque de base (021), et dans laquelle le premier côté (g) de la plaque de base (021) est parallèle à la direction d'étirement (x1) de la plaque en relief de transfert (02) et est proche de la première protubérance en forme de bande (022).

2. Plaque en relief de transfert (02) selon la revendication 1, dans laquelle les protubérances en forme de bande comprennent en outre une seconde protubérance en forme de bande (023) qui est disposée dans deux régions au niveau du même côté du second axe (y), et qui est agencée de façon symétrique par rapport au premier axe (x), et dans laquelle un centre (i) de la seconde protubérance en forme de bande (023) fait saillie en direction d'une direction d'éloignement par rapport à un centre (O) de la plaque de base (021).

3. Plaque en relief de transfert (02) selon la revendication 1 ou 2, dans laquelle les protubérances en forme de bande de la pluralité de protubérances en forme de bande présentent la même longueur dans la direction de non étirement (y1).

4. Plaque en relief de transfert (02) selon l'une quelconque des revendications 1 à 3, dans laquelle la première protubérance en forme de bande (021) présente une structure à multiples pas dans la direction de non étirement (y1).

5. Plaque en relief de transfert (02) selon la revendication 4, dans laquelle un quelconque pas de la structure à multiples pas dans la direction de non étirement (y1) de la plaque en relief de transfert (02) présente une longueur a = L/N, où L est une longueur de la première protubérance en forme de bande dans la direction de non étirement (y1) de la plaque en relief de transfert (02), N est un nombre total de pas dans la structure à multiples pas.

6. Plaque en relief de transfert (02) selon la revendication 4 ou 5, dans laquelle, dans la structure à multiples pas de la première protubérance en forme de bande (021), une distance (r) depuis un premier pas (P) jusqu'au premier côté (g) de la plaque de base (021) est inférieure à une distance (r1) depuis un second pas (Q) jusqu'au premier côté (g) de la plaque de base (021), et une distance (t) depuis le premier pas (P) jusqu'à un second côté (j) de la plaque de base (021) est supérieure à une distance (t1) depuis le second pas (Q) jusqu'au second côté (j) de la plaque de base (021), le second côté (j) de la plaque de base (021) est un côté de la plaque de base (021) qui est parallèle à la direction de non étirement (y1) et qui est proche de la première protubérance en forme de bande (022), et le premier pas (P) et le second pas (Q) sont deux quelconques pas adjacents dans la structure à multiples pas de la première protubérance en forme de bande (022).

7. Plaque en relief de transfert (02) selon l'une quelconque des revendications 2 à 4, dans laquelle la seconde protubérance en forme de bande (023) est disposée dans deux régions au niveau du même côté du second axe (y), et est agencée de façon symétrique par rapport au premier axe (x), et la seconde protubérance en forme de bande (023) présente une forme en arc ou triangulaire.

8. Plaque en relief de transfert (02) selon l'une quelconque des revendications 1 à 7, dans laquelle les protubérances en forme de bande de la pluralité de protubérances en forme de bande sont agencées selon n groupes de protubérances en forme de bande dans la direction de non étirement (y1), dans laquelle n est un entier positif, et chaque groupe de protubérances en forme de bande comprend au moins deux protubérances en forme de bande.

9. Plaque en relief de transfert (02) selon la revendication 8, dans laquelle deux quelconques protubérances en forme de bande adjacentes dans chaque groupe de protubérances en forme de bande, lesquelles sont disposées au niveau du même côté du second axe (y), présentent un intervalle identique.

10. Plaque en relief de transfert (02) selon l'une quelconque des revendications 1 à 9, dans laquelle les protubérances en forme de bande sont réalisées en résine photosensible ou, à titre d'alternative, les protubérances en forme de bande et la plaque de base (021) sont toutes réalisées en résine photosensible.
